# NEUE EUROPÄISCHE PATENTSCHRIFT

(11) **EP 0 207 049 B2**
(45) Veröffentlichungstag und Bekanntmachung des Hinweises auf die Entscheidung über den Einspruch: **26.10.1994**
(45) Hinweis auf die Patenterteilung: 06.07.1988
(21) Anmeldenummer: 86890095.2
(22) Anmeldetag: 04.04.1986
(51) Int. Cl.: F02B 23/06

(54) **Luftverdichtende Hubkolben-Brennkraftmaschine**
Air-compressing reciprocating piston-type internal-combustion engine
Moteur à combustion interne du type à pistons alternatifs et à compression d'air

(30) Priorität: 14.05.1985 AT 1442/85
(43) Veröffentlichungstag der Anmeldung: 30.12.1986
(73) Patentinhaber: Steyr-Nutzfahrzeuge Aktiengesellschaft, A-4400 Steyr (AT)
(72) Erfinder: Moser, Franz, Dipl.-Ing. Dr. techn., A-4400 Steyr (AT); Rammer, Franz, Dipl.-Ing., A-4493 Wolfern (AT); Priesner, Helmut, Dipl.-Ing., A-4400 Steyr (AT)

(56) Entgegenhaltungen:
- AT-B- 299 620
- DE-A- 1 955 084
- DE-A- 2 234 561
- DE-A- 2 728 063
- DE-A- 2 850 879
- DE-A- 3 123 459
- DE-A- 3 151 293
- DE-C- 938 102
- FR-A- 1 510 698
- ATZ Automobiltechnische Zeitschrift 76 (1974)/1 Seiten 1 und 3

## Beschreibung

Die Erfindung betrifft eine luftverdichtende Hubkolben-Brennkraftmaschine mit einer im Kolbenboden angeordneten, rotationssymmetrischen Brennraummulde und einer in diese direkt einspritzenden, mindestens drei Spritzlöcher aufweisenden Einspritzdüse, deren Achse mit der Achse der Brennraummulde einen spitzen Winkel einschließt, und mit einer eine Drehbewegung der in die Brennraummulde eintretenden Ladeluft erzeugenden Einlaßeinrichtung, wobei jedem Einspritzstrahl der Einspritzdüse ein Teilvolumen der Brennraummulde zugeordnet ist.

Durch die aus Konstruktionsgründen praktisch unvermeidbare Schrägstellung der Achse der Einspritzdüse gegenüber der Achse der Brennraummulde ergeben sich wegen der geometrischen Anordnung der einzelnen Spritzlöcher in bezug auf die Düsenachse unterschiedliche Durchflußbeiwerte, so daß die bei einem Einspritzvorgang durch die vorhandenen Spritzlöcher austretenden Kraftstoffmengen untereinander verschieden groß sind. Es ist bereits aus der FR-A-1 510 698 bei einer exzentrisch im Kolben angeordneten Brennraummulde bekannt, die Spritzlöcher in gleichmäßiger Winkelverteilung um die Düsenachse anzuordnen, also zwischen den Achsen der Spritzlöcher gleich große Winkel vorzusehen, wodurch eine regelmäßige Verteilung der Kraftstoffmenge in der Brennraummulde gewährleistet ist. Die Spritzlöcher können auch unterschiedliche Durchmesser besitzen, so daß unterschiedliche Kraftstoffmengen eingespritzt werden können.

Bei einer anderen bekannten Konstruktion sind zwar die Winkel zwischen den Achsen der Spritzlöcher verschieden groß, es sind aber zwischen den Schnittpunkten dieser Achsen mit der Wand der Brennraummulde gleiche Bogenlängen vorgesehen. Es hat sich nun gezeigt, daß in beiden Fällen keine optimale Gemischaufbereitung erreichbar ist, wozu noch kommt, daß die aus den einzelnen Spritzlöchern austretenden Kraftstoffstrahlen, da sie aus Fertigungsgründen meist die Erzeugenden eines gemeinsamen Kegels bilden, dessen Spitze auf der Düsenachse liegt, in unterschiedlichen Höhen auf die Wand der Brennraummulde auftreffen. Eine mangelhafte Gemischaufbereitung in der Brennraummulde hat negative Auswirkungen auf die Rauch- und Abgasemission sowie auf den Kraftstoffverbrauch. Außerdem ergibt sich auch eine ungünstige, ungleichmäßige thermische Kolbenbelastung.

Es ist auch schon bekannt (DE-A-1 955 084), jedem Einspritzstrahl der Einspritzdüse ein Teilvolumen der Brennraummulde zuzuordnen, wobei jedem Einspritzstrahl das gleiche Teilvolumen zugeteilt ist, d. h. es wird das Gesamtvolumen der Brennraummulde durch die Zahl der Einspritzstrahlen dividiert. Bei einer vierstrahligen Einspritzdüse ist daher jedem Einspritzstrahl genau ein Viertel des Gesamtvolumens der Brennraummulde zugeordnet. Dies ergibt aber ebenfalls keine optimale Gemischaufbereitung in der Brennraummulde, weil die Tatsache, daß durch die einzelnen Düsenlöcher aus den vorstehend angeführten Gründen unterschiedliche Kraftstoffmengen ausgespritzt werden, unberücksichtigt bleibt.

Demnach liegt der Erfindung die Aufgabe zugrunde, diese Mängel zu beseitigen und die eingangs geschilderte Hubkolben-Brennkraftmaschine so zu verbessern, daß zufolge guter Gemischaufbereitung verminderte Rauch- und Abgasemissionen auftreten, eine Verringerung des Kraftstoffverbrauches erzielt wird und ungleichmäßige thermische Kolbenbelastungen vermieden werden.

Die Erfindung löst die gestellte Aufgabe dadurch, daß bei gedachter Unterteilung der Brennraummulde durch zur Muldenachse parallele und durch die Achsen der Spritzlöcher verlaufende Ebenen in Teilräume das Volumen des an jedes Spritzloch in Drehrichtung der rotierenden Ladeluft anschließenden Teilraumes zum Gesamtvolumen der Brennraummulde im wesentlichen im gleichen Verhältnis steht, wie die während eines Einspritzvorganges jeweils durch ein zugehöriges Spritzloch austretende Kraftstoffmenge zur gesamten Einspritzmenge, wobei aus den Spritzlöchern unterschiedliche Kraftstoffmengen austreten.

Die Erfindung geht dabei von der Erkenntnis aus, daß zufolge der unterschiedlichen Durchflußbeiwerte der Spritzlöcher aus diesen verschieden groß Kraftstoffmengen austreten und daß eine gute bzw. gleichmäßige Gemischaufbereitung in der Brennraummulde nur dann erzielt wird, wenn gleichen Kraftstoffmengen gleiche Luftmengen zugemischt werden, also jedem Kraftstofftröpfchen das gleiche Luftvolumen zur Verfügung steht. Da nun die gedachten Teilräume der Brennraummulde hinsichtlich ihres Volumens im gleichen Verhältnis zueinander stehen, wie die aus den einzelnen Spritzlöchern austretenden Kraftstoffmengen, ist in Drehrichtung der Ladeluft jedem Kraftstoffstrahl das Teilvolumen der Brennraummulde zugeordnet, das der in diesem Strahl austretenden Kraftstoffmenge entspricht. Der Kraftstoff wird daher innerhalb der Brennraummulde gleichmäßig verteilt, wodurch auch die gewünschte gleichmäßige und gute Gemischaufbereitung erzielt wird. Aus dieser guten Gemischaufbereitung folgt dann die gewünschte Herabsetzung der Emissionen und des Kraftstoffverbrauches. Auch trägt die gleichmäßige Gemischaufbereitung innerhalb der ganzen Brennraummulde selbstverständlich zur Vergleichmäßigung der thermischen Belastung des Kolbens wesentlich bei. Die optimierte Gemischaufbereitung ermöglicht es, insbesondere in Kombination mit hohen Förderraten und hohen Einspritzdrücken, kürzere Zeiten für die Einspritzung und die Gemischaufbereitung zur erzielen, so daß der Einspritzbeginn relativ nahe und wirkungsgradmäßig günstig zum oberen Kolbentotpunkt hin verlegt werden kann, ohne das Einspritzende nachteiligerweise zu verzögern. Dadurch ist es weiters möglich, die Emission an Stickoxyden und das Geräusch sowie die mechanische Belastung der Maschine merkbar herabzusetzen.

In weiterer Ausbildung der Erfindung liegen die Schnittpunkte der Achsen aller Spritzlöcher mit der Wand der Brennraummulde in derselben Normalebene zur Muldenachse. Dadurch wird erreicht, daß die Auftreffpunkte aller Kraftstoffstrahlen im Bereich gleicher Strömungsverhältnisse der beim Kolbenhub in die Kolbenmulde verdrängten Luft liegen, woraus eine weitere Verbesserung der Gemischbildung folgt.

In der Zeichnung ist der Erfindungsgegenstand beispielsweise dargestellt, und zwar zeigen
Fig. 1 die erfindungswesentlichen Teile einer luftverdichtenden Hubkolben-Brennkraftmaschine in vereinfachter Darstellung im Schnitt nach der Linie I-I der Fig. 2 und die
Fig. 2 die Brennraummulde in Draufsicht bei verschiedenen Einspritzverhältnissen.

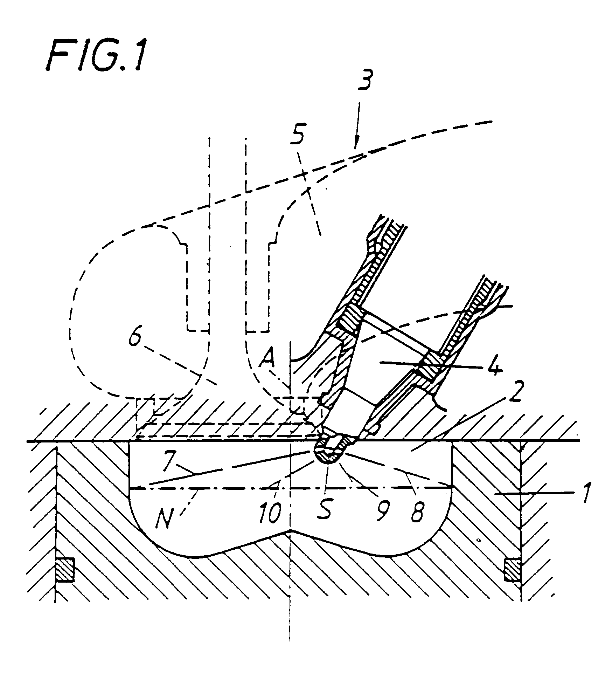

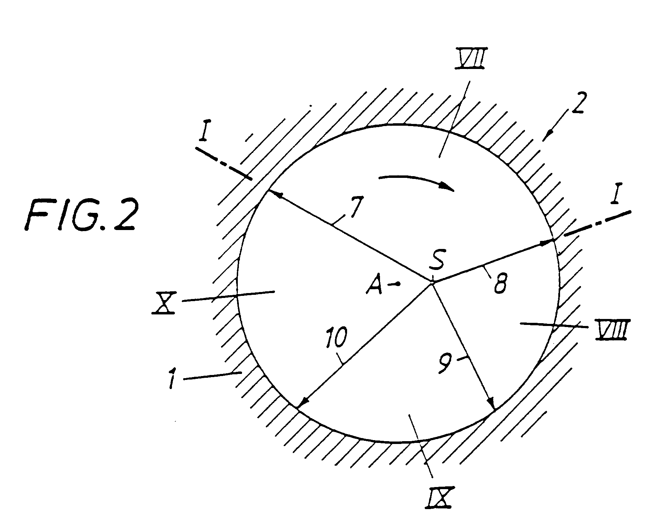

Im Kolbenboden 1 des Kolbens einer luftverdichtenden Brennkraftmaschine ist eine Brennraummulde 2 von rotationssymmetrischer Form ausgespart. Im Zylinderkopf 3 ist eine Einspritzdüse 4 eingesetzt, deren Achse mit der Achse der Brennraummulde 2 einen spitzen Winkel einschließt, wie dies Fig. 1 deutlich erkennen läßt. Ferner ist für die Ladeluft eine aus einem Einlaßkanal 5 und einem Einlaßventil 6 gebildete Einlaßeinrichtung vorgesehen, die so ausgebildet ist, daß eine Drehbewegung der in die Brennraummulde 2 eintretenden Ladeluft gemäß den Meilen in den Fig. 2 erzeugt wird.

Die durch den Schnittpunkt der Spritzlochachsen 7-10 bestimmte Spitze S der Einspritzdüse 4 ist mit Abstand von der Achse A der Brennraummulde 2 angeordnet. Aus der Schnittdarstellung in Fig. 1 ergibt sich deutlich, daß die Strömungsverhältnisse für das Spritzloch mit der Achse 7 wesentlich günstiger als jene für das Spritzloch mit der Achse 8 sind, da der Kraftstoff eine scharfe Umlenkung erfährt, wenn er der Richtung der Achse 8 folgt. Es treten also durch die Spritzlöcher bei einem Einspritzvorgang verschiedene Kraftstoffmengen aus. Um nun dennoch jeder Kraftstoffmengeneinheit die gleiche Ladeluftvolumseinheit zuzuordnen, steht gemäß Fig. 2 bei gedachter Unterteilung der Brennraummulde durch zur Muldenachse A parallele und durch die Achsen 7-10 verlaufende Ebenen in Teilräume Vll-X jeweils die durch ein Spritzloch austretende Kraftstoffmenge etwa im gleichen Verhältnis zur gesamten Einspritzmenge wie das Volumen des an das betreffende Spritzloch in Drehrichtung der Ladeluft anschließenden Teilraumes zum Gesamtvolumen der Brennraummulde 2. Es ist also jeweils dem Spritzloch mit der Achse 7 ein Teilraum VII und dem Spritzloch mit der Achse 8 ein Teilraum VIII usw. zugeordnet, wobei die Volumina der Teilräume Vll-X etwa im gleichen Verhältnis zueinander stehen wie die aus den Spritzlöchern mit den Achsen 7-10 austretenden Kraftstoffmengen.

Aus Fig. 1 ist zu erkennen, daß die Schnittpunkte der Achsen 7-10 aller Spritzlöcher mit der Wand der Brennraummulde 2 in derselben Normalebene N zur Muldenachse A liegen.

## Patentansprüche

1. Luftverdichtende Hubkolben-Brennkraftmaschine mit einer im Kolbenboden (1) angeordneten, rotationssymmetrischen Brennraummulde (2) und einer in diese direkt einspritzenden, mindestens drei Spritzlöcher aufweisenden Einspritzdüse (4), deren Achse mit der Achse (A) der Brennraummulde (2) einen spitzen Winkel einschließt, und mit einer eine Drehbewegung der in die Brennraummulde (2) eintretenden Ladeluft erzeugenden Einlaßeinrichtung (5, 6), wobei jedem Einspritzstrahl der Einspritzdüse (4) ein Teilvolumen der Brennraummulde (2) zugeordnet ist, dadurch gekennzeichnet, daß bei gedachter Unterteilung der Brennraummulde (2) durch zur Muldenachse (A) parallele und durch die Achsen (7-10) der Spritzlöcher verlaufende Ebenen in Teilräume (VII-X), das Volumen des an jedes Spritzloch in Drehrichtung der rotierenden Ladeluft anschließenden Teilraumes (VII-X) zum Gesamtvolumen der Brennraummulde (2) im wesentlichen im gleichen Verhältnis steht, wie die während eines Einspritzvorganges jeweils durch ein zugehöriges Spritzloch austretende Kraftstoffmenge zur gesamten Einspritzmenge" wobei aus den Spritzlöchern unterschiedliche Kraftstoffmengen austreten.

2. Brennkraftmaschine nach Anspruch 1, dadurch gekennzeichnet, daß die Schnittpunkte der Achsen (7-10) aller Spritzlöcher mit der Wand der Brennraummulde (2) in derselben Normalebene (N) zur Muldenachse (A) liegen.

## Claims

1. An air-compressing reciprocating internal combustion engine comprising a rotationally symmetrical combustion chamber recess (2) formed in the piston head (1), a fuel injection nozzle (4), which has at least three discharge orifices and directly injects into said recess and has an axis that includes an acute angle with the axis (A) of the combustion chamber recess, and inlet means (5, 6) for imparting a swirl to the charge air entering the combustion chamber recess (2), wherein a partial volume of the combustion chamber recess (2) is associated with each jet of fuel which is discharged from the fuel injection nozzle (4), characterized in that in case of an imaginary subdivision of the combustion chamber recess (2) into partial spaces (VII to X) by planes which are parallel to the axis (A) of the recess and extend through the axes (7 to 10) of the discharge orifices, the ratio of the volume of that partial space (VII to X) which adjoins each discharge orifice in the direction of rotation of the swirling charge air to the total volume of the combustion chamber recess (2) is substantially the same as the ratio of the quantity of fuel discharged from an associated discharge orifice to the total quantity of fuel injected during a fuel injection step, whereas different quantities of fuel are discharged by the discharge orifices.

2. An internal combustion engine according to claim 1, characterized in that all points at which the axes of the discharge orifices intersect the surface of the combustion chamber recess are disposed in the same plane that is normal to the axis of the recess.

## Revendications

1. Moteur à combustion interne du type à pistons alternatifs et à compression d'air avec une chambre de combustion (2) à symétrie de révolution en forme de cavité ménagée dans la tête de piston (1) et un injecteur (4) présentant au moins trois orifices d'injection injectant directement dans celle-ci, dont l'axe forme avec l'axe A de la chambre de combustion (2) un angle aigu, et avec un dispositif d'admission (5, 6) produisant un mouvement tournant à l'air entrant dans la chambre de combustion (2), chaque jet d'injection de l'injecteur (4) étant affecté à un volume partiel de la chambre de combustion (2) caractérisé en ce que par une division fictive en chambres partielles (VII-X) de la chambre de combustion (2) par des plans parallèles à l'axe A de la chambre et passant par l'axe des orifices d'injection (7-10) le volume des chambres partielles qui correspond à chaque orifice d'injection dans le sens de rotation de l'air tournant rapporté au volume total de la chambre de combustion (2) est en substance dans le même rapport que la quantité de carburant sortant de chaque orifice d'injection correspondant rapporté à la totalité de la quantité injectée pendant la phase d'injection, des quantités différentes de carburant sortant des orifices d'injection.

2. Moteur à combustion interne selon la revendication 1, caractérisé en ce que les points d'intersection des axes (7-10) de tous les orifices d'injection avec les parois de la chambre de combustion (2) se trouvent dans le même plan normal N à l'axe de la chambre A.
